# EUROPÄISCHE PATENTSCHRIFT

(11) **EP 1 031 723 B1**
(45) Veröffentlichungstag und Bekanntmachung des Hinweises auf die Patenterteilung: **08.06.2005**
(21) Anmeldenummer: 00102497.5
(22) Anmeldetag: 05.02.2000
(51) Int. Cl.: F02F 7/00

(54) **Kurbelwellenlager-Anordnung in einem Kurbelgehäuse einer Hubkolbenmaschine, insbesondere Brennkraftmaschine**
Crankshaft bearing layout in a piston engine crankcase
Agencement des paliers d'un vilebrequin pour un moteur à pistons

(30) Priorität: 23.02.1999 DE 19907661
(43) Veröffentlichungstag der Anmeldung: 30.08.2000
(73) Patentinhaber: Bayerische Motoren Werke Aktiengesellschaft, 80809 München (DE)
(72) Erfinder: Schmidbauer, Helmut, 83209 Prien (DE)

(56) Entgegenhaltungen:
- DE-A- 4 342 041
- DE-A- 19 604 547
- DE-B- 1 292 941
- US-A- 5 024 189

## Beschreibung

Die Erfindung bezieht sich nach dem Oberbegriff des Patentanspruches 1 auf eine Kurbetwellenlager-Anordnung in einem Kurbelgehäuse einer Hubkolbenmaschine, insbesondere Brennkraftmaschine, umfassend einen mit dem Kurbelgehäuse verbundenen Lagerstuhl mit einem lösbar angeordneten Lagerdeckel, der über eine gesonderte Traverse mit beiderseits seitlich des Lagerdeckels an einer Zwischenwand des Kurbelgehäuses angeordneten Anlageflächen in Verbindung steht

Eine derartige Anordnung ist beispielsweise aus der DE 1 292 941 B bekannt, wobei eine auf dem Lagerdeckel sich federnd abstützende Traverse vorgesehen ist, die sich zwischen außerhalb der inneren Befestigungsschrauben liegenden Stellen der Zwischenwand erstreckt und an diesen Stellen durch zwei äußere Befestigungsschrauben gegen die Zwischenwand verspannt ist derart, daß im spannungsfreien Zustand ein Spiel zwischen der Traverse und der Zwischenwand besteht, so daß beim Zusammenspannen der Traverse mit der Zwischenwand eine teilweise Entlastung der inneren Befestigungsschrauben eintritt.

Weiter ist aus der DE 43 42 041 ein Kurbelwellen-Endlager bekannt mit einem lösbaren Deckel, der zur Erzielung eines kürzeren Kurbelgehäuses mit einer Traverse verschraubbar ist, deren um 90° gewinkelte Enden mit dem Maschinengehäuse durch Schraubbolzen verbindbar sind.

Ferner ist aus dem deutschen Gebrauchsmuster DE 68 12 460 U eine weitere Kurbelwellenlager-Anordnung mit einem lösbaren Lagerdeckel und einer gesonderten Traverse bekannt, wobei die mit dem Lagerdeckel verschraubbare Traverse zusätzlich über quer gerichtet angeordnete Verschraubungen mit dem Gehäuse verbunden ist zur zusätzlichen Aussteifung des Maschinengehäuses.

Schließlich ist aus der DE 35 42 135 C2 eine Kurbelwellenlager-Anordnung bekannt, bei der die einzelnen, lösbar angeordneten Lagerdeckel über eine gemeinsame Brücke untereinander verbunden sind zur Erzielung einer hohen Festigkeit bei raumsparender Ausbildung eines Schmierölkreislaufes.

Die vorgenannten Anordnungen wirken bekanntlich Lagerdeckelschwingungen in Richtung der Kurbelwelle und quer dazu entgegen. Nachteilig hierbei sind die aufwendigen Gestaltungen.

Der Erfindung liegt die Aufgabe zugrunde, für eine gattungsgemäße Kurbelwellenlager-Anordnung eine in Aufbau und Montage einfacher gestaltete und handhabbare Ausbildung aufzuzeigen.

Diese Aufgabe ist mit dem Patentanspruch 1 dadurch gelöst, daß mit den höhengleich angeordneten Anlageflächen im wesentlichen niveaugleiche Anschlagflächen am Lagerdeckel in Bereichen der Lagerdeckel-Verschraubung vorgesehen sind, wobei die mit dem Lagerdeckel gemeinsam verschraubbare Traverse zumindest in den mit den Anlageflächen der Zwischenwand korrespondierenden Abschnitten mit Vorsprüngen ausgebildet ist, die bei der gemeinsamen Verschraubung von Traverse und Lagerdeckel in die Anlageflächen eindringbar gestaltet sind.

Eine besonders vorteilhafte Ausgestaltung der Erfindung ist dadurch erreicht, daß die Traverse in den jeweiligen, mit den Anlageflächen und den Anschlagflächen korrespondierenden Abschnitten mit im wesentlichen parallel beabstandeten, schneidenartigen Vorsprüngen versehen ist, wobei die Vorsprünge in beiden Abschnitten zueinander V-förmig angeordnet sind.

In weiterer vorteilhafter Ausgestaltung sind die Vorsprünge spanlos ausgebildet und zumindest randschichtgehärtet. Damit ist ein Eindringen der Vorsprünge sowohl in die Anlageflächen der Zwischenwand als auch in die Anschlagflächen des Lagerdeckels sichergestellt, so daß mit der auf diese erfindungsgemäße Weise erzielten formschlüssigen Verbindung der Traverse sowohl mit der Zwischenwand als auch mit dem Lagerdeckel dessen Schwingungen in Richtung der Kurbelwellenachse und quer dazu sicher unterbunden sind.

Eine in der Ausgestaltung einfache Ausbildung ist ferner dadurch erreicht, daß eine streifenartige, biegeelastische Traverse mit an der Zwischenwand angeordneten Anlageflächen zusammenwirkt, die um ein vorbestimmtes Maß über Niveau der Anschlageflächen am Lagerdeckel vorgesehen sind. Damit ist ein Verkrallen der Traverse über ihre Vorsprünge in den Anlageflächen der Zwischenwand sichergestellt durch das unterschiedliche Niveau zwischen den Anlageflächen und den Anschlagflächen zur geringfügigen Biegung der Traverse.

Um das formschlüssige Eindringen der insbesondere schneidenartigen Vorsprünge der Traverse in die Anlageflächen an der Zwischenwand zu verstärken, kann in weiterer erfindungsgemäßer Ausgestaltung die streifenartige Traverse mittels seitlich angeordneter Schenkel zu einem U-Profil ergänzt sein, wobei die Verschraubungen gegebenenfalls über Buchsen gegen den Steg der Traverse abgestützt sind. Mit dieser Ausgestaltung ist eine gesteigerte elastische Biegesteifigkeit der Traverse erzielt.

Das Prinzip einer erhöhten elastischen Biegesteifigkeit bei vorteilhaft einfacher Ausgestaltung der Traverse ist gemäß einem anderen Vorschlag dadurch erreicht, daß die Traverse aus einem Streifen Federstahl gebildet ist mit im Bereich der Anlageflächen zu diesen abgewinkelten Endabschnitten, die zueinander V-förmig angeordnete Schneiden tragen. Mit der Anordnung V-förmig angeordneter Schneiden ist ein Schwingen des Lagerdeckeis in und quer zur Längsachse der Kurbelwelle sicher unterbunden. Diesen Zweck erfüllen auch kegelförmig oder pyramidenförmig spitze Vorsprünge an der Traverse, die vom Hauptanspruch ebenfalls umfaßt sind.

Die Erfindung ist anhand in der Zeichnung dargestellter Ausführungsbeispiele beschrieben. Es zeigt
- Figur 1 mit 3: jeweils eine Kurbelwellenlager-Anordnung mit jeweils unterschiedlich gestalteter Traverse,
- Figuren 3 mit 6: die Traversen der vorgenannten Lager-Anordnungen in Einzeldarstellungen.

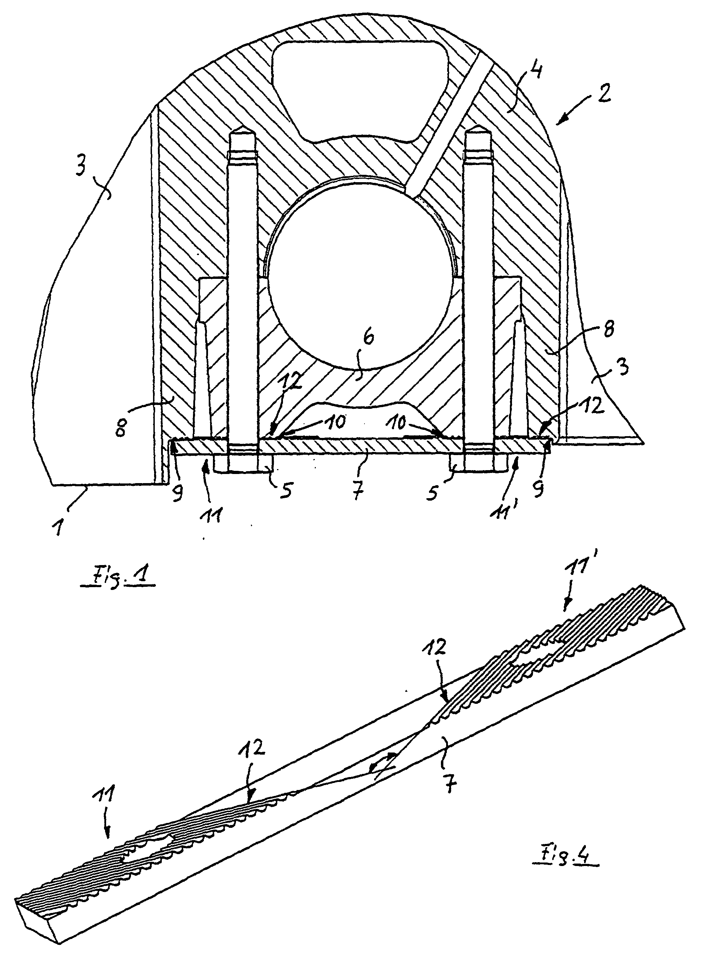

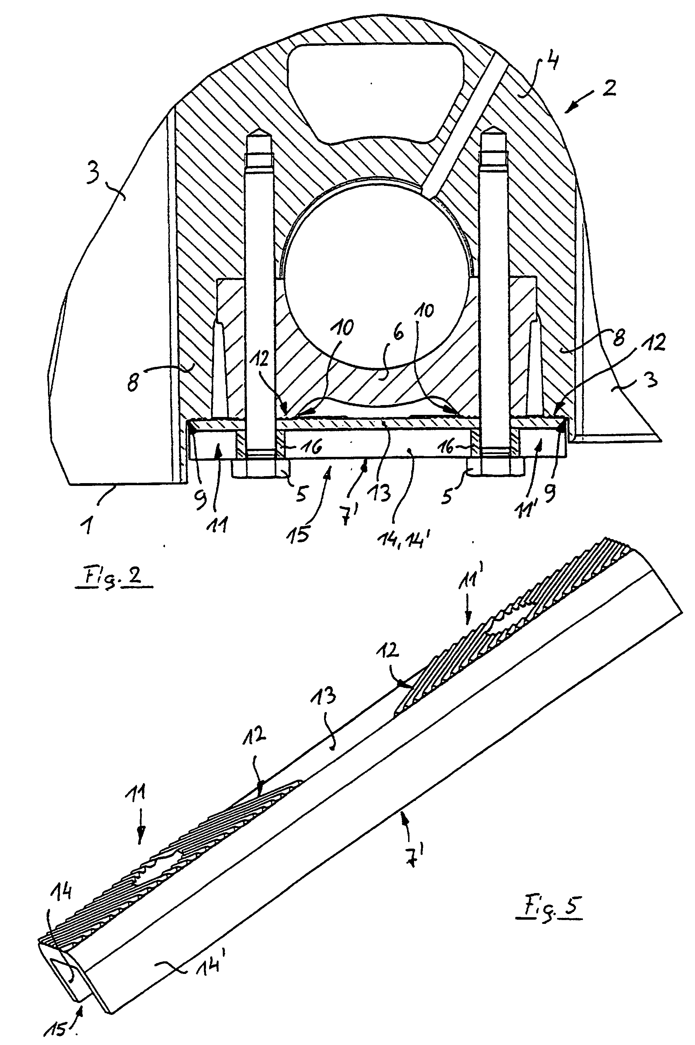

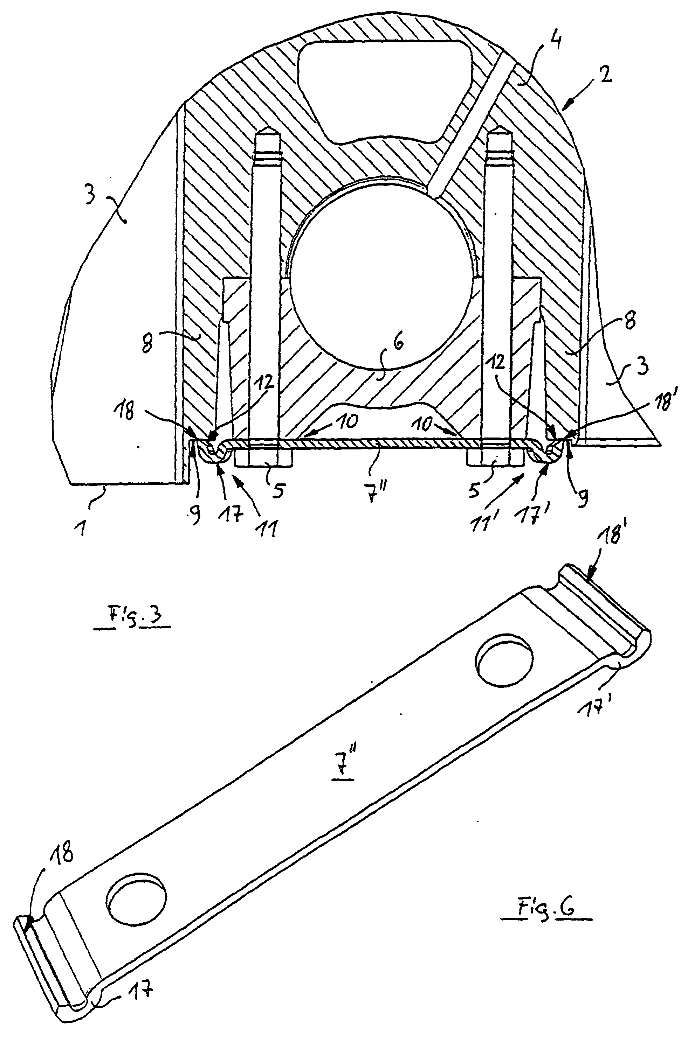

Insbesondere für eine nicht näher dargestellte Brennkraftmaschine 1 zeigt jede der Figuren 1 mit 3 eine Kurbelwellenlager-Anordnung 2 in einem Kurbelgehäuse 3. Die Kurbelwellenlager-Anordnung 2 umfaßt einen mit dem Kurbelgehäuse 3 verbundenen Lagerstuhl 4 mit einem über Schraubbolzen 5 lösbar angeordneten Lagerdeckel 6. Jedem Lagerdeckel 6 ist eine gesonderte Traverse 7 oder 7' oder 7" zugeordnet, die gemeinsam mit dem Lagerdeckel 6 über die Schraubbolzen 5 mit dem Lagerstuhl 4 verschraubt ist. Jede Traverse 7, 7', 7" ist beiderseits des Lagerdeckels 6 hinaus verlängert und steht beiderseits seitlich des Lagerdeckels 6 mit an einer Zwischenwand 8 des Kurbelgehäuses 3 angeordneten Anlageflächen 9 in Verbindung.

Mit der Traverse 7, 7', 7" ist das Ziel verfolgt, durch eine belastete, nicht dargestellte Kurbelwelle verursachte Schwingungen des Lagerdeckels 6 in Richtung der Kurbelwellenachse und quer dazu zu unterbinden.

Eine im Aufbau und für die Montage einfach gestaltete Anordnung 2 kennzeichnet sich dadurch, daß mit den höhengleich angeordneten Anlageflächen 9 im wesentlichen niveaugleiche Anschlagflächen 10 am Lagerdeckel 6 in Bereichen der Lagerdeckel-Verschraubung 5 vorgesehen sind, wobei die mit dem Lagerdeckel 6 gemeinsam verschraubbare Traverse 7, 7', 7" zumindest in den mit den Anlageflächen 9 der Zwischenwand 8 korrespondierenden Abschnitten 11, 11' mit Vorsprüngen 12 ausgebildet ist, die bei der gemeinsamen Verschraubung von Traverse 7, 7', 7" und Lagerdeckel 6 in die Anlageflächen 9 eindringbar gestaltet sind.

Gemäß einer ersten, einfachen Ausführung nach den Figuren 1 und 4 ist die Traverse 7 in den jeweiligen, mit den Anlageflächen 9 der Zwischenwand 8 und den Anschlagflächen 10 des Lagerdeckels 6 korrespondierenden Abschnitten 11, 11' mit im wesentlichen parallel beabstandeten, schneidenartigen Vorsprüngen 12 versehen, wobei die Vorsprünge 12 in beiden Abschnitten 11, 11' zueinander V-förmig angeordnet sind. Mit den bei der gemeinsamen Verschraubung von Traverse 7 und Lagerdeckel 6 am Lagerstuhl 4 sich in die Anschlagflächen 10 des Lagerdeckels 6 und in die Anlageflächen 9 der Zwischenwand 8 einschneidenden Vorsprüngen 12 ist mit deren V-förmiger Anordnung ein Schwingen des Lagerdeckels 6 in Richtung der nicht gezeigten Kurbelwelle und quer dazu sicher unterbunden.

Eine im Aufbau einfache Gestaltung ist mit einer aus den Figuren 1 und 4 ersichtlichen, streifenartigen und biegeelastischen Traverse 7 erzielt, die mit an der Zwischenwand 8 angeordneten Anlageflächen 9 zusammenwirkt, die um ein vorbestimmtes Maß über dem Niveau der Anschlagfläche 9 am Lagerdeckel 6 vorgesehen sind. Durch die gegenüber den Anschlagflächen 9 am Lagerdeckel 6 etwas erhöht angeordneten Anlageflächen 9 der Zwischenwand 8 werden bei der Verschraubung von Traverse 7 und Lagerdeckel 6 die Abschnitte 11 und 11' in ihren freien Endbereichen biegeelastisch beansprucht zum formschlüssigen Eindringen der schneidenartigen Vorsprünge 12 in die Anlageflächen 9.

Weiter ist eine einfache Gestaltung der Traverse 7 dadurch erreicht, daß die Vorsprünge 12 spanlos ausgebildet und zumindest randschichtgehärtet sind, womit das formschlüssige Eindringen der Vorsprünge 12 in die Anlageflächen 9 der Zwischenwand 8 sichergestellt ist.

Zur Erzielung einer besonders biegesteifen Traverse 7' ist diese mittels am streifenartigen Steg 13 seitlich angeordneter Schenkel 14, 14' zu einem U-Profil ergänzt. Um ferner eine über die Schenkel 14, 14' schmalbauende Traverse 7' zu erreichen, sind die Verschraubungen bzw. Schraubbolzen 5 über Buchsen 16 gegen den Steg 13 der Traverse 7' abgestützt. Die Buchsen 16 können lose oder mit der Traverse 7' verbunden ausgebildet sein.

Vorzugsweise ist die Traverse 7' mit beispielsweise durch Rollen oder Prägen spanlos ausgebildeten schneidenartigen Vorsprüngen 12 versehen, wobei die in den Abschnitten 11 und 11' zueinander V-förmig angeordneten schneidenartigen Vorsprüngen 12 durch eine Randschicht-Härtung eine harte Oberfläche aufweisen.

Schließlich ist aus den Figuren 3 und 6 eine aus einem Streifen Federstahl gebildete Traverse 7" ersichtlich mit im Bereich der Anlageflächen 9 zu diesen abgewinkelten Endabschnitten 17, 17', die zueinander V-förmig angeordnete Schneiden 18, 18' tragen. Die Schneiden 18, 18' können gemäß Figur 3 einseitig keilartig gestaltet sein oder gemäß Figur 6 symetrisch ausgeformt sein.

Im Rahmen der Erfindung können auch spitzkegelige oder pyramidenförmige Vorsprünge anstelle oder in Kombination mit den schneidenartigen Vorsprüngen vorgesehen sein.

## Patentansprüche

1. Kurbelwellenlager-Anordnung in einem Kurbelgehäuse einer Hubkolbenmaschine, insbesondere Brennkraftmaschine,
- umfassend einen mit dem Kurbelgehäuse (3) verbundenen Lagerstuhl (4) mit einem lösbar angeordneten Lagerdeckel (6), der
- über eine gesonderte Traverse (7, 7', 7") mit beiderseits seitlich des Lagerdeckels (6) an einer Zwischenwand (8) des Kurbelgehäuses (3) angeordneten Anlageflächen (9) in Verbindung steht,
**dadurch gekennzeichnet,**
- **daß** mit den im wesentlichen höhengleich angeordneten Anlageflächen (9) im wesentlichen niveaugleiche Anschlagflächen (10) am Lagerdeckel (6) in Bereichen der Lagerdeckel-Verschraubung (5) vorgesehen sind, wobei
- die mit dem Lagerdeckel (6) gemeinsam verschraubbare Traverse (7, 7', 7") zumindest in den mit den Anlageflächen (9) der Zwischenwand (8) korrespondieren Abschnitten (11, 11') mit Vorsprüngen (12) ausgebildet ist, die
- bei der gemeinsamen Verschraubung von Traverse (7, 7', 7") und Lagerdeckel (6) in die Anlageflächen (9) eindringbar gestaltet sind.

2. Kurbelwellenlager nach Anspruch 1, **dadurch gekennzeichnet,**
- **daß** die Traverse (7, 7') in den jeweiligen, mit den Anlageflächen (9) und den Anschlagflächen (10) korrespondierenden Abschnitten (11, 11') mit im wesentlichen parallel beabstandeten, schneidenartigen Vorsprüngen (12) versehen ist, wobei
- die Vorsprünge (12) in beiden Abschnitten (11, 11') zueinander V-förmig angeordnet sind.

3. Kurbelwellenlager nach Anspruch 2, **dadurch gekennzeichnet,**
- **daß** eine streifenartige, biegeelastische Traverse (7) mit an der Zwischenwand (8) angeordneten Anlageflächen (9) zusammenwirkt, die
- um ein vorbestimmtes Maß über dem Niveau der Anschlagflächen (9) am Lagerdeckel (6) vorgesehen sind.

4. Kurbelwellenlager nach Anspruch 2, **dadurch gekennzeichnet,**
- **daß** eine biegeelastische Traverse (7') mittels an einem streifenartigen Steg (13) seitlich angeordneten Schenkel (14, 14') zu einem U-Profil (15) ergänzt ist, wobei
- die Verschraubungen (5) ggf. über Buchsen (16) gegen den Steg (13) der Traverse (7') abgestützt sind.

5. Kurbelwellenlager nach Anspruch 1, **dadurch gekennzeichnet,**
- **daß** eine biegeelastische Traverse (7") aus einem Streifen Federstahl gebildet ist mit im Bereich der Anlageflächen (9) zu diesen abgewinkelten Endabschnitten (17, 17'), die
- zueinander V-förmig angeordnete Schneiden (18, 18') tragen.

6. Kurbelwellenlager nach einem der Ansprüche 1 bis 4, **dadurch gekennzeichnet, daß** die Vorsprünge (12) spanlos ausgebildet und zumindest randschichtgehärtet sind.

## Claims

1. A crankshaft bearing arrangement in a crankcase of a reciprocating-piston engine, especially an internal combustion engine,
- comprising a bearing block (4) connected to the crankcase (3) and with a detachable bearing cap (6) which
- is connected by a separate cross-member (7, 7', 7") to contact surfaces (9) disposed on each side of the bearing cap (6) on an intermediate wall (8) of the crankcase (3)
**characterised in that**
- abutment surfaces (10) substantially level with the contact surfaces (9), which are at substantially the same height, are provided near the screws (5) for the bearing cap (6), wherein
- the cross-member (7, 7', 7"), which can be screwed together to the bearing cap (6), is formed with projections (12) at least in the portions (11, 11') corresponding to the contact surfaces (9) on the intermediate wall (8),
- the projections being adapted to penetrate into the contact surfaces (9) when the cross-member (7, 7', 7") and the bearing cap (6) are screwed together.

2. A crankshaft bearing according to claim 1, **characterised in that**
- the cross-member (7, 7') is provided with edge-like projections (12) substantially parallel to one another in the respective portions (11, 11') corresponding to the contact surfaces (9) and the abutment surfaces (10), wherein
- the projections (12) in the two portions (11, 11') are arranged in a V relative to one another.

3. A crankshaft bearing according to claim 2, **characterised in that**
- a flexurally elastic cross-member (7) in the form of a strip cooperates with contact surfaces (9) on the intermediate wall (8),
- the surfaces being at a set difference above the level of the abutment surfaces (9) on the bearing cap (6).

4. A crankshaft bearing according to claim 2, **characterised in that**
- a flexurally elastic cross-member (7') is converted into a U-profile (15) by limbs (14, 14') disposed on the sides of a strip-like web (13), wherein
- the screws (5) abut the web (13) of the cross-member (7') optionally via bushes (16).

5. A crankshaft bearing according to claim 1, **characterised in that**
- a flexurally elastic cross-member (7") is made from a strip of spring steel with end portions (17, 17') in the region of and bent towards the contact surfaces (9),
- the end portions bearing knife edges (18, 18') arranged in a V relative to one another.

6. A crankshaft bearing according to any of claims 1 to 4, **characterised in that** the projections (12) are made without metal-cutting and are hardened at least in the edge layer.

## Revendications

1. Palier de vilebrequin dans un boîtier de vilebrequin d'un moteur à piston alternatif, en particulier d'un moteur à combustion interne,
- comprenant une chaise de palier (4), reliée au boîtier de vilebrequin (3) et munie d'un couvercle de palier (6) amovible, laquelle,
- par l'intermédiaire d'une traverse (7, 7', 7") distincte, est en liaison avec des surfaces d'appui (9) disposées de chaque côté du couvercle de palier (6) sur une paroi intermédiaire (8) du boîtier de vilebrequin (3),
**caractérisé en ce que**
- dans les zones où le couvercle de palier a un vissage (5), on prévoit des surfaces d'arrêt (10) situées sur le couvercle de palier (6) et presque au même niveau que des surfaces d'appui (9) placées presque à la même hauteur,
- la traverse (7, 7', 7") qui peut être vissée conjointement au couvercle de palier (6) ayant des saillies (12) au moins dans les segments (11, 11') qui correspondent aux surfaces d'appui (9) de la paroi intermédiaire (8),
- ces saillies étant conçues pour pénétrer dans les surfaces d'appui (9) lorsque la traverse (7, 7', 7") et le couvercle de palier sont vissés l'un à l'autre.

2. Palier de vilebrequin selon la revendication 1,
**caractérisé en ce que**
- la traverse (7, 7') a des saillies (12) en forme de lames disposées presque parallèlement dans chacun des segments (11, 11') qui correspondent aux surfaces d'appui (9) et aux surfaces d'arrêt (10), et
- les saillies (12) dans les deux segments (11, 11') sont disposées en V les unes par rapport aux autres.

3. Palier de vilebrequin selon la revendication 2,
**caractérisé en ce qu'**
- une traverse (7) élastique à la flexion et en forme de bande interagit avec des surfaces d'appui (9) situées sur la paroi intermédiaire (8) et
- prévues dans une mesure prédéfinie au-dessus du niveau des surfaces d'arrêt (10) sur le couvercle de palier (6).

4. Palier de vilebrequin selon la revendication 2,
**caractérisé en ce qu'**
- une traverse (7) élastique à la flexion est complétée pour obtenir un profilé en U (15) à l'aide de branches (14, 14') placées latéralement sur une entretoise (13) en bande,
- les vissages (5) étant appuyés contre l'entretoise (13) de la traverse (7') éventuellement au moyen de coussinets (16).

5. Palier de vilebrequin selon la revendication 1,
**caractérisé en ce qu'**
- une traverse (7") élastique à la flexion est formée par une bande d'acier à ressorts comportant, dans la zone des surfaces d'appui (9), des segments terminaux (17, 17') recourbés par rapport à celles-ci,
- ces segments terminaux portant des lames (18, 18') disposées en V l'une par rapport à l'autre.

6. Palier de vilebrequin selon l'une des revendications 1 à 4,
**caractérisé en ce que**
les saillies (12) sont formées sans enlèvement de copeaux et sont durcies au moins sur la couche superficielle.
